# EUROPEAN PATENT APPLICATION

(11) **EP 2 444 881 A1**
(43) Date of publication of application: **25.04.2012**
(21) Application number: 10186148.2
(22) Date of filing: 01.10.2010
(51) Int. Cl.: G06F 3/048, G06F 1/16

(54) **Method to manipulate graphical user interface items of a handheld processing device, such handheld procesing device, and computer program**

(71) Applicant: Telefonaktiebolaget L M Ericsson (PUBL), 164 83 Stockholm (SE)
(72) Inventor: Bergström, Martin, SE-224 68, LUND (SE); Gustafsson, Harald, SE-223 63, LUND (SE)
(74) Representative: Ström & Gulliksson AB

(57) **Abstract**

A method to manipulate graphical user interface, GUI, items of a handheld processing device comprising a display and a movement detecting unit is disclosed. The method comprises displaying a first view comprising a set of GUI items; enabling selection of at least one GUI item of the set of GUI items by a composite user interaction; enabling a change of view based on a detected movement by the movement detecting unit upon the movement being performed in a three-dimensional space wherein a second view is displayed, the second view comprising a target GUI item not displayed in the first view; and enabling dropping of the selected GUI item at the target GUI item by the composite user interaction. A handheld processing device and a computer program are also disclosed.

## Description

### Technical field

The present invention generally relates to a method to manipulate graphical user interface, GUI, items of a handheld processing device, a handheld processing device and a computer program.

### Background

Handheld processing devices such as smart-phones are running operating systems which commonly display a single application on the whole screen, maybe with the exception for a status list. Each application displays its own content utilizing common user interface elements. The application might also contain multiple simultaneous views, e.g. having several web-pages rendered but only displaying one at a time. Manipulation of content is therefore more cumbersome than experienced e.g. on desktop computers which due to their larger screens enable solutions for such manipulations to be approached more freely. It is therefore a desire to provide an approach of intuitive manipulation of content in handheld processing devices.

### Summary

An object of the invention is to at least alleviate the above stated problem. The present invention is based on the understanding that manipulation of GUI items on e.g. a small screen on a handheld processing device can take advantage of intuitive movements of the handheld device that are detected and interpreted to perform the manipulation.

According to a first aspect, there is provided a method to manipulate graphical user interface, GUI, items of a handheld processing device comprising a display and a movement detecting unit. The method comprises displaying a first view comprising a set of GUI items; enabling selection of at least one GUI item of the set of GUI items by a composite user interaction; enabling a change of view based on a detected movement by the movement detecting unit upon the movement being performed in a three-dimensional space wherein a second view is displayed, the second view comprising a target GUI item not displayed in the first view; and enabling dropping of the selected GUI item at the target GUI item by the composite user interaction.

The composite user interaction may comprise actuating a user input by pressure, holding the pressure during change of views, and releasing the pressure. The display of the handheld processing device may be a touch sensitive display arranged for touch interaction by the user aligned with displayed content, the user input by the pressure may comprise actuation of the touch sensitive display at a position on the display displaying the selected GUI item, and the dropping of the selected GUI item may comprise releasing the pressure when the actuation position is at the displaying position on the display of the target GUI item. Alternatively, a movement in one general direction in said space may cause zooming of displayed content, the user input by the pressure may comprise actuation of a key when the first view is zoomed at a position displaying the selected GUI item, and the dropping of the selected GUI item may comprise releasing the pressure when the second view is zoomed at the displaying position of the target GUI item.

The method may further comprise detecting a change in orientation performed in at least one orientation degree of freedom of the handheld processing device, wherein a function related to the selection and dropping is determined based on the detected change in orientation in the at least one orientation degree of freedom of the handheld processing device. The function may comprise any of moving, copying, disposing, activating and deactivating the selected GUI item. The function may comprise the selection of the at least one GUI item.

According to a second aspect, there is provided a handheld processing device comprising a display, a movement detecting unit, and a controller arranged to manipulate graphical user interface, GUI, items of the handheld processing device upon user interaction. The handheld processing device is arranged to display a first view comprising a set of GUI items on the display; enable selection action of at least one GUI item of the set of GUI items by a composite user interaction; enable a change of view based on a detected movement by the movement detecting unit upon the movement being performed in a three-dimensional space wherein a second view is displayed on the display, and wherein the controller is arranged to provide the second view comprising a target GUI item not displayed in the first view; and enable a drop action of the selected GUI item at the target GUI item by the composite user interaction.

The handheld processing device may further comprise a pressure sensitive user input device, wherein the composite user interaction comprises actuating a user input by pressure, holding the pressure during the change of views, and releasing the pressure at the pressure sensitive user input device. The display of the handheld processing device may be a touch sensitive display arranged for touch interaction by the user aligned with displayed content, the touch sensitive display comprising the pressure sensitive user input device, and the user input by the pressure comprises actuation of the touch sensitive display at a position on the display displaying the selected GUI item, and the drop action of the selected GUI item is controlled by the controller upon releasing the pressure when the actuation position is at the displaying position on the display of the target GUI item. A movement in one general direction in said space may cause the controller to zoom displayed content. The pressure sensitive user input device may comprise a key. The user input by the pressure may comprise actuation of the key when the first view is zoomed at a position displaying the selected GUI item, and the drop action of the selected GUI item may be caused upon releasing the pressure when the second view is zoomed at the displaying position of the target GUI item. The handheld processing device may further be arranged to detect a change in orientation performed in at least one orientation degree of freedom of the handheld processing device, wherein a function related to the selection action and drop action is determined by the controller based on the detected change in orientation in the at least one orientation degree of freedom of the handheld processing device. The function may comprise any of moving, copying, disposing, activating and deactivating the selected GUI item. The function may comprise the selection of the at least one GUI item.

According to a third aspect, there is provided a computer program comprising computer executable instructions which when executed by a processor causes a handheld processing device to perform the method according to the first aspect.

The change of view may include any of zoom, pan and scroll, based on respective movement in mutually perpendicular directions.

A change in orientation in the at least one orientation degree of freedom of the handheld processing device can be tilt around any of the three mutually perpendicular general directions of the handheld processing device, or a combination thereof.

In this context, a movement being performed in a three-dimensional space means a movement not confining a plane, i.e. the movement per se, and as a whole, is performed in at least three general directions, each being mutually essentially perpendicular at each point of the movement, cf. three-dimensional Cartesian or polar coordinates. Further, in this context, a composite user interaction means a user interaction performed as a series of actions, i.e. selection, grabbing and dropping interleaved with movements transitioned to change of views, composed into a single, probably complex, maybe continuous, aggregated action. The case of a continuous action may be an action that is not dividable into a series of actions that may be separated in time, i.e. no pauses for other interactions to be performed by the user. The composite action may be interleaved with further actions not involved in the manipulation of GUI items.

Other objectives, features and advantages of the present invention will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings.
Fig 1 illustrates an example of manipulating a handheld processing device according to an embodiment.
Fig. 2 is a flow chart illustrating a method of manipulating a GUI item with a composite user interaction.
Fig. 3 is a flow chart illustrating a method of manipulating a GUI item according to an embodiment.
Fig. 4 is a block diagram schematically illustrating elements of a handheld processing device involved in manipulation of GUI items.
Fig. 5 schematically illustrates a computer-readable medium comprising a computer program to be downloaded to and executed by a processing device.

### Detailed description of preferred embodiments

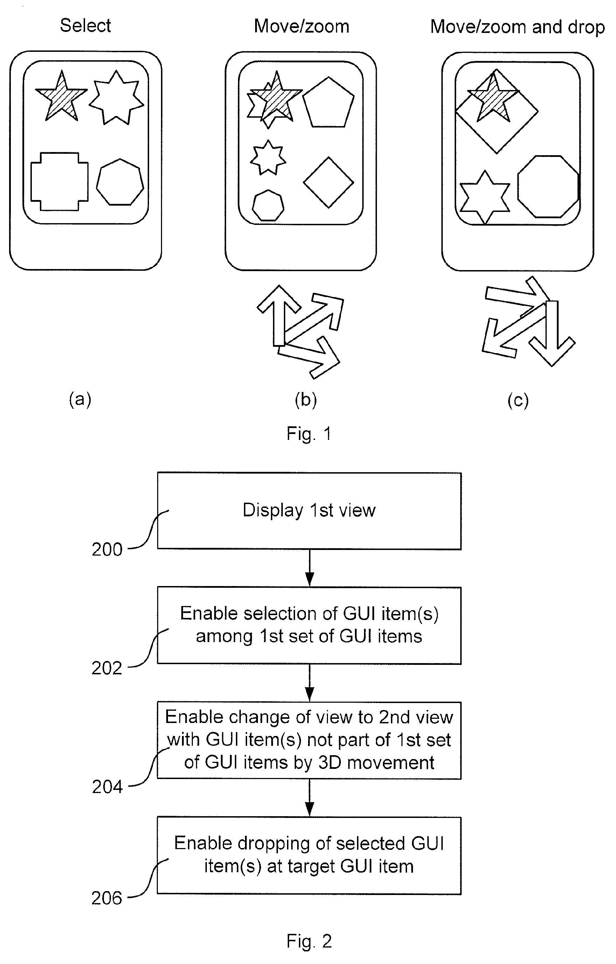

Fig 1 illustrates an example of manipulating a handheld processing device according to an embodiment. The display on part (a) illustrates a first view comprising a plurality of GUI items, among which one GUI item is selected, which here is illustrated as marked. Parts (b) and (c) illustrate movement being performed in a three-dimensional space, as indicated by arrows below the handheld processing device. By the movement, which is detected by the handheld device, a change of view is performed and other GUI items can show up on the changed views. The selected GUI item can remain displayed in unchanged format, or be indicated in any other way, such that the user experiences it as brought on to the changed views. Part (c) illustrates a found target GUI, here illustrated as the diamond-shaped symbol which also can be seen in the view in part (b) at another zoomed level, where the selected GUI item can be dropped, e.g. by releasing pressure on a key or on a touch sensitive display. A so called drag-and-drop action is thus performed in a way that is particularly suitable for handheld processing devices.

Fig. 2 is a flow chart illustrating a method of manipulating a GUI item with a composite user interaction. In a first displaying step 200, a first view comprising a set of GUI items is displayed. Then in a selection step 202, selection of at least one GUI item of the set of GUI items by a composite user interaction is enabled. The composite user interaction is thus started and continues with a view changing step 204 enabling a change of view based on a detected movement by the movement detecting unit upon the movement being performed in a three-dimensional space whereby a second view is displayed. The second view comprises, if movement is performed properly by a user, a target GUI item not displayed in the first view. The composite user interaction then continues with a dropping step 206 enabling dropping of the selected GUI item at the target GUI item by the composite user interaction. The drag-and-drop action is thereby completed.

The selection of the GUI item can thus comprise actuating a user input by a pressure, and the dropping of the selected GUI item comprises releasing the pressure. The performing of actuating a user input by pressure, holding the pressure during change of views, and releasing the pressure will be experienced as the selection of the GUI item comprises actuating a user input by a pressure, and the dropping of the selected GUI item comprises releasing the pressure. An intuitive similarity with picking up a physical item, moving it and dropping is an advantage in sense of user friendliness.

The display of the handheld processing device can be a touch sensitive display arranged for touch interaction by the user aligned with displayed content. The user input by the pressure can then comprise actuation of the touch sensitive display at a position on the display displaying the selected GUI item, e.g. by putting a finger on the displayed GUI item to be selected. Similarly, the dropping of the selected GUI item can then comprise releasing the pressure when the actuation position is at the displaying position on the display of the target GUI item. A further emphasized user feeling of picking, moving and dropping can thus be achieved.

Another example can be where a movement in one general direction in said space causes zooming of displayed content, and the user input by the pressure comprises actuation of a key when the first view is zoomed at a position displaying the selected GUI item. This can be a feasible solution for example for low-end devices which may not have touch sensitive display and/or graphical abilities for advanced rendering of layered graphics, or simply for users preferring it. Hence, zoom in is made such that more or less only the GUI item(s) to be selected is viewed, and then selection is made by pressing a selection key. The dropping of the selected GUI item comprises releasing the pressure when the second view is zoomed at the displaying position of the target GUI item, thus similarly selected by zooming in on the target GUI item. Between the selection and dropping, the user is enabled to zoom out such that navigation to the second view can be made by movements of the handheld processing device.

User interaction can further comprise changing orientation of the handheld processing device, e.g. by tilt around any of the three mutually perpendicular general directions of the handheld processing device, or a combination thereof, i.e. adding up to three degrees of freedom. Detection of such change in orientation can provide further input parameters to be controlled by the user in a physically tangible way. The method can thus comprise detecting a change in orientation performed in at least one orientation degree of freedom of the handheld processing device, wherein a function related to the selection and dropping is determined based on the detected change in orientation in the at least one orientation degree of freedom of the handheld processing device. The function can for example comprise any of moving, copying, disposing, activating and deactivating the selected GUI item, depending on the used processing environment. The function can for example comprise the selection of the at least one GUI item.

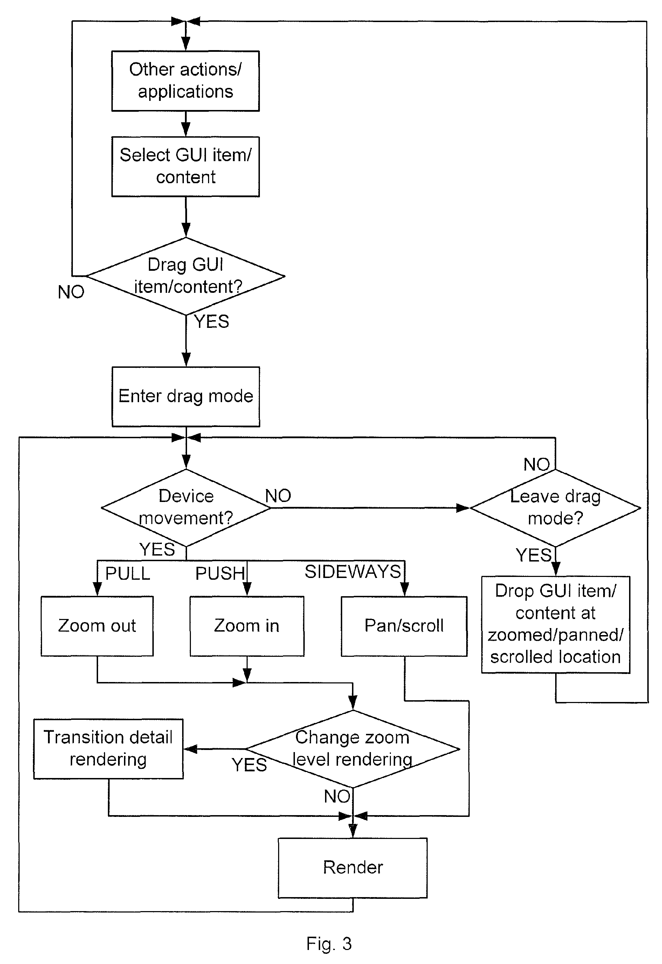

Fig. 3 is a flow chart illustrating an embodiment of a solution of transferring content between applications or application views. The user select/mark content that is to be transferred or if all in view or likely content is to be transferred, no selection is required. The content is graphically represented in the views by one or more items, the GUI item(s).

Next the user press and hold a user interface item. The device then enters into a drag content mode. By pulling the phone towards the user the display is zoomed out showing the current application view as well as other applications and application views. The user then moves the phone sideways to centre the receiving application view. Simultaneously the user may start pushing the phone away to zoom in on the intended application-view. When the zoom level makes the majority of the display be covered by one application view the view is going into the normal unzoomed level. At this stage any sideway motion is to find a specific drop location within that application view including scrollable areas. When the user releases the user interface item the drag content mode is left and the content is dropped/pasted into the specified location.

Alternatively when the user have one application view covering the majority of the screen the user continues to zoom in until one user interface element covers the majority of the screen which then releases the drop.

The user may pull/push interactively during the drag mode if the user happened to zoom in on the wrong application view.

The rendered application views may change dependent on zoom level. Each zoom level may for example have the following representation from highest level to lowest level:
1) Clusters of similar or latest used applications are represented by general icons
2) Clusters of application views are represented by one application icon
3) Each application view is represented by one application icon, optionally with descriptive names, e.g. open web page title.
4) Each application view is represented of a saved application screen dump
5) Each application view is represented by a currently rendered application view surface
6) Each application view is represented by a currently rendered application surface and interactively change (scroll) the view.
7) The display has a scaled cut-out of the currently rendered application surface and potentially interactively change the view.

The movements can be detected by utilizing an accelerometer sensor.

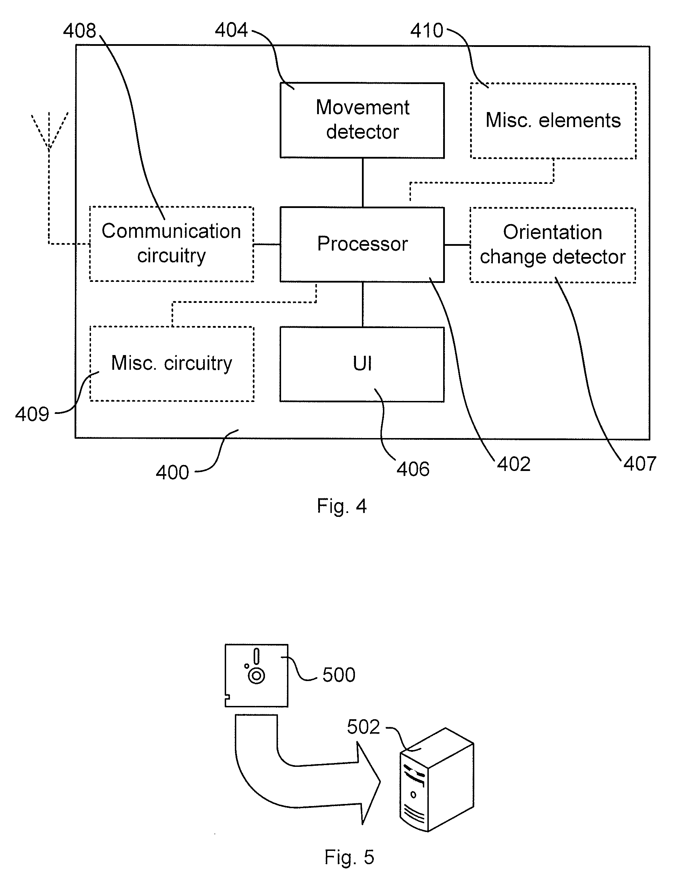

Fig. 4 is a block diagram schematically illustrating elements of a handheld processing device 400. Only elements involved in manipulation of GUI items are described, while optional elements and elements not involved in the manipulation are very briefly discussed not to obscure the gist of the approach of manipulating GUI items. The handheld processing device 400 comprises a processor 402, a movement detector 404 and a user interface UI 406. The UI comprises a display and input means. The UI can also comprise for example audio input and output means such as microphone and speaker. The display is of course essential for the GUI, and the processor 402 is arranged to control the display and thus also involved in the interaction with the GUI. The movement detector 404 is preferably connected to the processor 402, directly or indirectly. The movement detector 404 thus provides a signal to the processor indicating movements such that the processor 402 is able to control the GUI according to what is demonstrated above. The handheld processing device 400 can also comprise an orientation change detector 407 which preferably is connected to the processor 402, directly or indirectly. The orientation change detector 407 thus provides a signal to the processor indicating change in orientation of the handheld processing device 400 such that the processor 402 is able to control the GUI according to what is demonstrated above. The handheld processing device 400 can also comprise communication circuitry 408, e.g. for radio communication to a telecommunication network, miscellaneous circuitry 409 such as imaging circuitry, positioning circuitry, etc., and/or miscellaneous elements 410 such as actuators, mechanics, lenses, etc.

The methods according to the present invention is suitable for implementation with aid of processing means, such as computers and/or processors, especially since the case with all handheld processing devices in question have such processing capabilities. Therefore, there is provided computer programs, comprising instructions arranged to cause the processing means, processor, or computer to perform the steps of the method according to any of the embodiments described with reference to Figs 2 and 3. The computer programs preferably comprises program code which is stored on a computer readable medium 500, as illustrated in Fig. 5, which can be loaded and executed by a processing means, processor, or computer 502 to cause it to perform the methods, respectively, according to the embodiments. The computer 502 and computer program product 500 can be arranged to execute the program code sequentially where actions of the any of the methods are performed stepwise. The processing means, processor, or computer 502 is preferably what normally is referred to as an embedded system. Thus, the depicted computer readable medium 500 and computer 502 in Fig. 5 should be construed to be for illustrative purposes only to provide understanding of the principle, and not to be construed as any direct illustration of the elements.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method to manipulate graphical user interface, GUI, items of a handheld processing device comprising a display and a movement detecting unit, the method comprising
displaying a first view comprising a set of GUI items;
enabling selection of at least one GUI item of the set of GUI items by a composite user interaction;
enabling a change of view based on a detected movement by the movement detecting unit upon the movement being performed in a three-dimensional space wherein a second view is displayed, the second view comprising a target GUI item not displayed in the first view; and
enabling dropping of the selected GUI item at the target GUI item by the composite user interaction.

2. The method according to claim 1, wherein the composite user interaction comprises actuating a user input by pressure, holding the pressure during change of views, and releasing the pressure.

3. The method according to claim 2, wherein the display of the handheld processing device is a touch sensitive display arranged for touch interaction by the user aligned with displayed content, the user input by the pressure comprises actuation of the touch sensitive display at a position on the display displaying the selected GUI item, and the dropping of the selected GUI item comprises releasing the pressure when the actuation position is at the displaying position on the display of the target GUI item.

4. The method according to claim 2, wherein a movement in one general direction in said space causes zooming of displayed content, the user input by the pressure comprises actuation of a key when the first view is zoomed at a position displaying the selected GUI item, and the dropping of the selected GUI item comprises releasing the pressure when the second view is zoomed at the displaying position of the target GUI item.

5. The method according to any of claims 1 to 4, further comprising detecting a change in orientation performed in at least one orientation degree of freedom of the handheld processing device, wherein a function related to the selection and dropping is determined based on the detected change in orientation in the at least one orientation degree of freedom of the handheld processing device.

6. The method according to claim 5, wherein the function comprises any of moving, copying, disposing, activating and deactivating the selected GUI item.

7. The method according to claim 5 or 6, wherein the function comprises the selection of the at least one GUI item.

8. A handheld processing device comprising a display, a movement detecting unit, and a controller arranged to manipulate graphical user interface, GUI, items of the handheld processing device upon user interaction, wherein the handheld processing device is arranged to
display a first view comprising a set of GUI items on the display;
enable selection action of at least one GUI item of the set of GUI items by a composite user interaction;
enable a change of view based on a detected movement by the movement detecting unit upon the movement being performed in a three-dimensional space wherein a second view is displayed on the display, and wherein the controller is arranged to provide the second view comprising a target GUI item not displayed in the first view; and
enable a drop action of the selected GUI item at the target GUI item by the composite user interaction.

9. The handheld processing device according to claim 8, further comprising a pressure sensitive user input device, wherein the composite user interaction comprises actuating a user input by pressure, holding the pressure during the change of views, and releasing the pressure at the pressure sensitive user input device.

10. The handheld processing device according to claim 9, wherein the display of the handheld processing device is a touch sensitive display arranged for touch interaction by the user aligned with displayed content, the touch sensitive display comprising the pressure sensitive user input device, and the user input by the pressure comprises actuation of the touch sensitive display at a position on the display displaying the selected GUI item, and the drop action of the selected GUI item is controlled by the controller upon releasing the pressure when the actuation position is at the displaying position on the display of the target GUI item.

11. The handheld processing device according to claim 9, wherein a movement in one general direction in said space causes the controller to zoom displayed content, the pressure sensitive user input device comprises a key, the user input by the pressure comprises actuation of the key when the first view is zoomed at a position displaying the selected GUI item, and the drop action of the selected GUI item is caused upon releasing the pressure when the second view is zoomed at the displaying position of the target GUI item.

12. The handheld processing device according to any of claims 8 to 11, further arranged to detect a change in orientation performed in at least one orientation degree of freedom of the handheld processing device, wherein a function related to the selection action and drop action is determined by the controller based on the detected change in orientation in the at least one orientation degree of freedom of the handheld processing device.

13. The handheld processing device according to claim 12, wherein the function comprises any of moving, copying, disposing, activating and deactivating the selected GUI item.

14. The handheld processing device according to claim 12 or 13, wherein the function comprises the selection of the at least one GUI item.

15. A computer program comprising computer executable instructions which when executed by a processor causes a handheld processing device to perform the method according to any of claims 1 to 7.
